(19) **Europäisches Patentamt**
**European Patent Office**
**Office européen des brevets**

(11) **EP 2 153 168 B1**

(12) **EUROPEAN PATENT SPECIFICATION**

(45) Date of publication and mention
of the grant of the patent:
**10.05.2017 Bulletin 2017/19**

(51) Int Cl.:
***G01B 11/275*** *(2006.01)* ***G06K 9/32*** *(2006.01)*

(21) Application number: **07777174.9**

(86) International application number:
**PCT/US2007/011978**

(22) Date of filing: **21.05.2007**

(87) International publication number:
**WO 2008/143614 (27.11.2008 Gazette 2008/48)**

(54) **METHOD AND APPARATUS FOR WHEEL ALIGNMENT**

VERFAHREN UND VORRICHTUNG ZUR RADAUSRICHTUNG

PROCÉDÉ ET APPAREIL D'ALIGNEMENT DE ROUES

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**17.02.2010 Bulletin 2010/07**

(60) Divisional application:
**13002507.5 / 2 636 989**

(73) Proprietor: **Snap-on Incorporated
Kenosha, WI 53141-1410 (US)**

(72) Inventors:
• **KASSOUF, Thomas, L.
Port Washington, WI 53074 (US)**

• **GLICKMAN, Stephen, L.
Los Gatos, CA 95030 (US)**
• **JACKSON, David, A.
Point Roberts, WA 98281 (US)**

(74) Representative: **Müller-Boré & Partner
Patentanwälte PartG mbB
Friedenheimer Brücke 21
80639 München (DE)**

(56) References cited:
| | |
|---|---|
| **EP-A- 0 806 629** | **WO-A-01/46909** |
| **JP-A- 61 277 010** | **JP-A- 2002 090 118** |
| **JP-A1- 2021 083 103** | **US-A- 5 889 550** |
| **US-A- 6 148 528** | **US-A1- 2001 022 655** |
| **US-A1- 2003 187 610** | **US-A1- 2006 152 711** |
| **US-B2- 6 973 202** | |

Printed by Jouve, 75001 PARIS (FR)

**Description**

The teaching presented herein relates to a method and apparatus for determining the alignment of vehicle wheels. More specifically, the teaching relates to a method and apparatus for determining the alignment of vehicle wheels using a three-dimensional target.

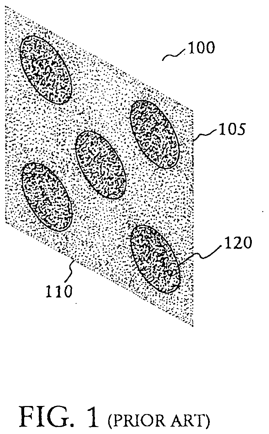

It is commonly known that if the wheels of a vehicle are out of alignment with each other, it can result in excessive or uneven wear of the tires and/or adversely affect the handling and stability of the vehicle. Therefore, the wheels of a vehicle need to be periodically checked to determine whether they are in alignment. Conventionally, to determine the alignment of wheels, a two-dimensional target is mounted onto the wheel to facilitate wheel alignment. A conventional two-dimensional target 100 is shown in Fig. 1 (PRIOR ART). The illustrated two-dimensional target 100 is a planar object 105 having a plurality of target elements 120 spatially arranged in a known pattern on the object surface 110. The target elements 120 may be made retro-reflective and the object surface 110 may be non-reflective to provide suitable contrast.

The two-dimensional target 100 can be used to facilitate wheel alignment, which is disclosed in U.S. Patent Nos. 5,535,522 and 5,809,658. A wheel alignment system (as illustrated in Figure 9 of U.S. Patent No. 5,809,658) may be deployed in which a camera may be set up to capture a two-dimensional image of the two-dimensional target 100, in which the target elements 120 on the two-dimensional target 100 are visible. Certain features relating to the target elements may be computed by processing the captured two-dimensional image and such features can be used to determine the alignment of the wheel to which the two-dimensional target is attached using techniques well know in the wheel alignment art.

US 6 148 528 A refers to a method and apparatus for determining the alignment of motor vehicle wheels. The apparatus includes targets for attachment to the object, optical sensing means for viewing the targets, electronic processing means connected to said optical sensing means for processing data relating to images of the targets to determine position and/or alignment information, and a display means for displaying said position and/or alignment information.

WO 01/46909 A concerns a method and apparatus for automatically identifying faults in a machine vision measuring system, providing a self-diagnostic capability for machine vision based metrology and tracking systems. First, a mathematical model of a target visualized by the system is created and stored. A target is then imaged in the field and fiducials of the target are identified. Centroid positions of the detected fiducials of the imaged target are finally compared to the centroid positions of the fiducials of the mathematical model.

US 2006/152711 A1 A refers to an image-based, non-contact vehicle measurement method and system for determining spatial characteristics and parameters of an object under measurement. Image capturing devices are used to capture images of the object from different viewing angles. A data processing system performs computations of spatial characteristics based on the captured images.

US 6 973 202 B2 describes a method and a system for determining the position and orientation of an object with a single-camera. A set of markers attached and associated with the object is visually tracked and geometric isolation is performed to use the coordinates of the markers to determine the location and the orientation of the associated object.

JP 2002 090118 A refers to a three-dimensional position and orientation sensing device, wherein a marker with a given position on an object is photographed and the position and orientation of the object is determined via the relative position and orientation of the marker and the photographic means.

JP 61 277010 A concerns a method for measuring position and orientation of a moving body wherein a plurality of marks distributed three-dimensionally on said moving body are observed by a camera. An image processor is provided to process the data received from the camera.

US 2003/187610 A1 describes a vehicle wheel alignment system wherein a computer obtains one or more colour images of optical targets associated with the vehicle and processes the colour images to obtain vehicle wheel alignment measurements.

EP 0 806 629 A relates to device for inspecting the geometry of a vehicle, in which the appearance of an element fixed to a wheel rim of the vehicle is caused to vary as a function of the angel of view at which it is seen, without thereby producing a perspective image of this element.

One problem associated with use of a two-dimensional target for wheel alignment is that a two-dimensional target of a large size is needed in order to achieve accurate wheel alignment determination.

The need to achieve accurate measurement such as wheel alignment determination is addressed by the present teaching. The present teaching provides an improved system using a 3D target.

One aspect of the present teaching relates to a method for determining the alignment of a motor vehicle wheel. A three-dimensional target is attached on the vehicle wheel, where the three-dimensional target has thereon a plurality of target elements that have certain known geometric characteristics and are configured in 3D space in accordance with certain known three-dimensional relationships with each other. A plurality of target element images corresponding to the plurality of target elements are detected from a 2D image of the three-dimensional target acquired by at least one camera. The alignment of the wheel is determined based on a spatial orientation of the three-dimensional target determined based on the target element images and the three-dimensional relationships among the target elements.

A different aspect of the present teaching relates to a system for determining the alignment of a motor vehicle wheel. A three-dimensional target is used for attaching to a vehicle wheel, where the three-dimensional target has thereon a plurality of target elements that have certain known geometric characteristics and are configured in 3D space in accordance with known three-dimensional relationships with each other. A 2D imaging system is deployed for acquiring a 2D image of the three dimensional target. A target element feature detecting system detects, from the 2D image, a plurality of target element images corresponding to the plurality of target elements. A wheel alignment determination system determines the alignment of the vehicle wheel based on a spatial orientation of the three-dimensional target determined in accordance with the detected target element images and the three-dimensional relationships among the target elements.

According to one embodiment of a system for determining the alignment of a motor vehicle wheel, a three-dimensional target is used that is attachable to a wheel to be aligned. The three-dimensional target has thereon a plurality of target elements that have certain known geometric characteristics and are configured in 3D space in accordance with certain known three-dimensional relationships with each other. An imaging system, having at least one camera, is configured capable of acquiring a 2D image of the three dimensional target. A wheel orientation determination system is configured for utilizing the 2D image of the three-dimensional target to determine wheel orientation based on the three-dimensional target.

The invention is claimed in claim 1 for the method and in claim 11 for the system, and in the corresponding dependent claims, and it is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

Fig. 1 (PRIOR ART) shows a conventional two-dimensional target used in vehicle wheel alignment;

Figs. 2a-2e show exemplary constructions of three-dimensional targets, according to an embodiment of the present teaching;

Fig. 3 illustrates an exemplary configuration of an orientation determination system according to an embodiment of the present teaching;

Fig. 4 depicts the geometry of a wheel alignment system using a three-dimensional target, according to an embodiment of the present teaching;

Fig. 5 depicts a high level diagram of an exemplary wheel alignment system using a three-dimensional target, according to an embodiment of the present teaching;

Fig. 6 depicts a high level diagram of an exemplary 2D image feature detection system, according to an embodiment of the present teaching; and

Fig. 7 is a flowchart of an exemplary process for determining wheel alignment using a three-dimensional target, according to an embodiment of the present teaching.

DETAILED DESCRIPTION

The present invention relates to a method and system for determining the alignment of vehicle wheels that utilize a three dimensional (3D) target associated with an object to make a measurement related to the object via image processing of a two dimensional (2D) image of the 3D target. In some embodiments, the object corresponds to a vehicle wheel. A 3D target can be mounted on the vehicle wheel that enables accurate wheel alignment. In some embodiments, the object corresponds to a handheld device. A 3D target can be attached to or associated with the device to enable ride height measurement. In some embodiments, the object corresponds to a camera. A 3D target attached or associated with the camera can be used to enable self-calibrating. Details relating to 3D target enabled measurement based on 2D image processing are provided below.

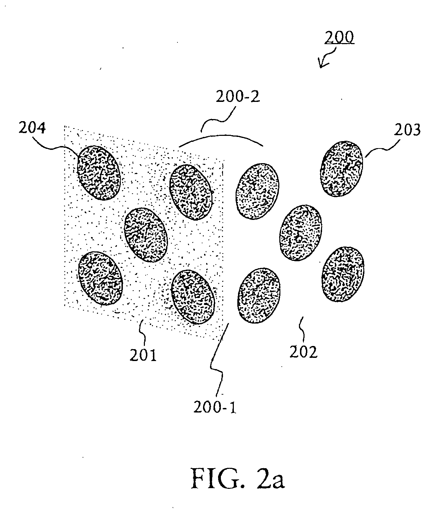

Figs. 2a-2e show exemplary constructions of three-dimensional targets, according to an embodiment of the present teaching. In Fig. 2a, a three-dimensional target 200 comprises two or more solid planes 201 and 202. The two planes 201 and 202 are spatially adjacent to each other by aligning one side of each of the planes (see 200-1) and they form a certain angle 200-2. On plane 201, there are a plurality of target elements 204 that are positioned on plane 201 in accordance with some known spatial pattern. Each target element may possess some characteristics such as a shape, size, or color; and such features can be quantitatively measured. For example, as shown in Fig. 2a, the target elements correspond to solid circles. Such circles are often termed as fiducials or fids. The radius or centroid of each such circle may be measured. In some embodiments, the target elements on the same plane may be uniform. In other embodiments, the target elements on the same plane may not be uniform.

Target elements on each plane are made visually perceptible. This may be achieved by introducing contrast between target elements and the surface of the plane on which they reside. As shown in Fig. 2a, the target elements are made darker than the background surface (the non target element regions) of the plane 201. In some embodiments, the target elements and the background surface may be made of different materials. For instance, the target elements may be made retro-reflective and the background surface may be made non-reflective. In other embodiments, the background surface may be made both lighter than the target elements and non-reflective.

In Fig. 2a, plane 202 also has a plurality of target elements 203. The target elements on plane 202 may be constructed in a manner similar to the target elements on plane 201. For example, target elements in both planes 201 and 202 may possess similar characteristics, as shown in Fig. 2a. In some embodiments, plane 202 may be different from plane 201. The target elements on plane 202 may have different characteristics. In addition, target elements on plane 202 may be arranged differently.

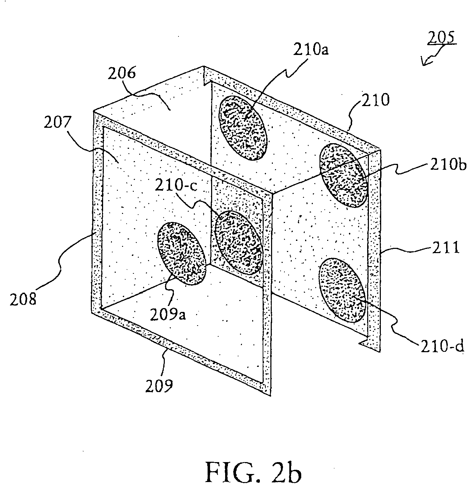

Fig. 2b shows a different three-dimensional target 205, according to one embodiment of the present teaching. Three-dimensional target 205 has an overall shape substantially similar to a rigid cube with a plurality of facets, including top 206, front 207, left 208, bottom 209, back 210, and right 211. In a preferred embodiment, at least two of the facets have one or more target elements thereon. As seen in Fig. 2b, there are four target elements on the back facet, 210-a, 210-b, 210-c, 210-d, and there is one target element 209-a on the front facet of the three-dimensional target 205. In this preferred embodiment, the surface norms of both facets having two-dimensional target elements thereon have the same orientation. In some embodiments, the two-dimensional target elements on both facets are arranged in a pattern so that all the target elements are visible when perceived along certain lines of sight. Although all are visible, these target elements may or may not overlap. To allow all target elements to be visible, one of the two facets may be made transparent, which is illustrated in Fig. 2b where the front facet is transparent when looking in from the front facet towards the back facet.

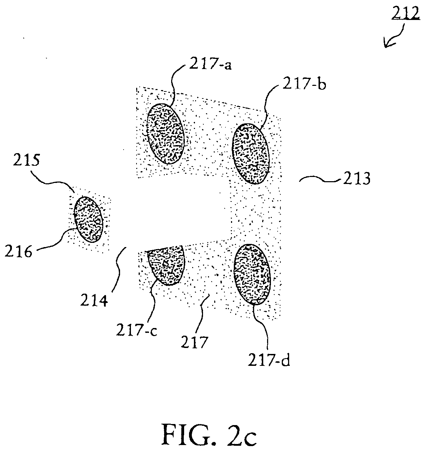

Fig. 2c shows another exemplary construction of a three-dimensional target 212, according to an embodiment of the present teaching. As shown in Fig. 2c, a three-dimensional structure 214 is arranged physically adjacent to a plane 213 and the two form a certain spatial relationship. In some embodiments, the geometric characteristic of the three-dimensional structure 214 is such that it has one surface thereon that has the same spatial orientation same as the spatial orientation of surface 217 of the plane 213 to which the three-dimensional structure 214 is attached. For example, surface 215 in Fig. 2c has the same spatial orientation as surface 217 of the plane 213.

Within such a 3D construction, a plurality of two-dimensional target elements, 216, 217-a, 217-b, 217-c, 217-d, are spatially arranged on both surface 217 and surface 215 according to some pattern. In one preferred embodiment, the two-dimensional target elements are arranged so that all target elements are visible when viewed along a certain line of sight. Although all are visible, these target elements may or may not overlap. In one preferred embodiment, the line of sight is perpendicular to both surface 215 and 217. Fig. 2c illustrates one possible arrangement, where a plurality of target elements are arranged on plane 213 around the three-dimensional structure 214 and a single target element is on surface 215. It should be understood that such illustrations are merely exemplary and they do not limit the scope of the present teaching.

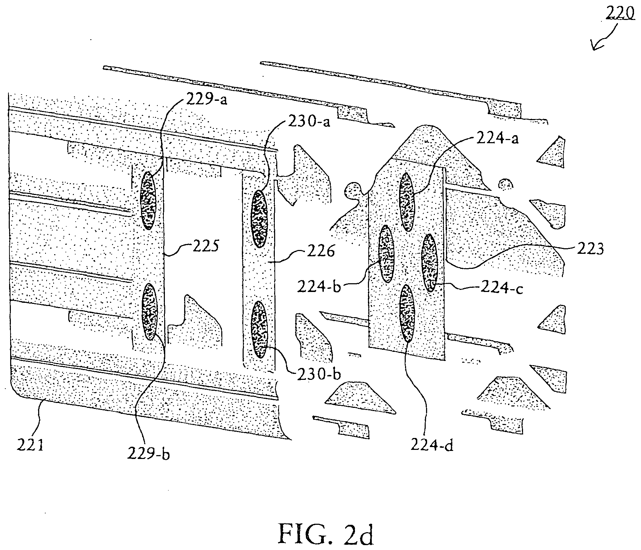

Fig. 2d shows yet another exemplary construction of a three-dimensional target 220, according to one embodiment of the present teaching. The three-dimensional target 220 corresponds to a three-dimensional structure, which has at least two layers of planes in parallel in some hollow space. As shown in Fig. 2d, there are planes 223, 225, and 226, that are parallel to each other and they are positioned at different locations along an axis perpendicular to the surfaces of the planes. One or more of the parallel planes may be on one of the surfaces of the three-dimensional structure 220. For example, parallel planes 225 and 226 are on the front surface 221 of the 3D structure 220.

In some embodiments, each of the planes has one or more target elements arranged thereon according to some pattern. In the illustrated embodiment as shown in Fig. 2d, there are four target elements 223-a, 223-b, 223-c, and 223-d arranged in a diamond shape on plane 223. There are two target elements 229-a and 229-b on plane 225 and two target elements 230-a and 230-b on plane 226. In some embodiments, the pattern in which the target elements are arranged is such that all the target elements are visible when viewed along a certain line of sight. These target elements may or may not overlap.

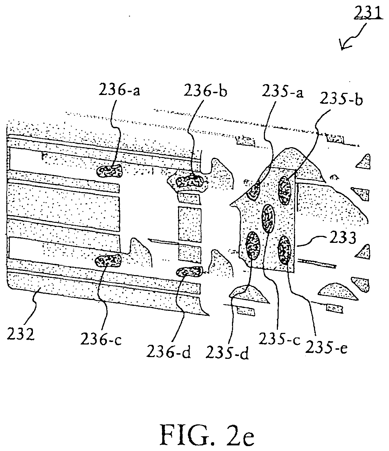

Fig. 2e shows a similar three-dimensional construct 231 as 220 (shown in Fig. 2d) but having different types of target elements on different planes of the structure. For instance, as shown in Fig. 2e, four target elements 236-a, 236-b, 236-c, and 236-d are LEDs that are mounted on the front surface 232 of the three-dimensional structure 231. In addition, Fig. 2e shows a different arrangement of target elements 235-a, 235-b, 235-c, 235-d, 235-e on plane 233.

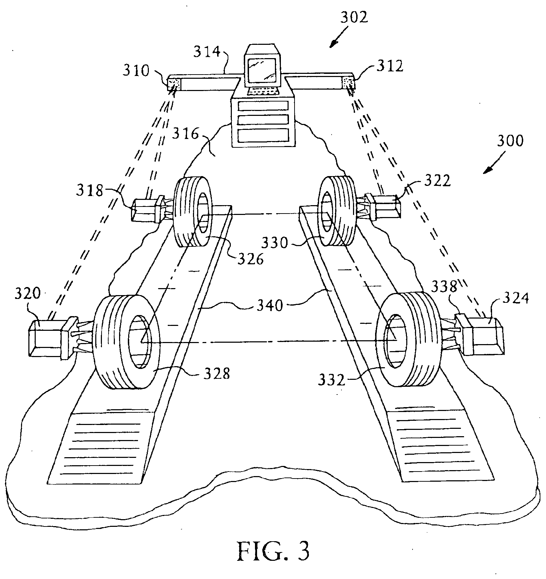

An example of an orientation determination system on which the present teaching may be implemented is illustrated in FIG. 3. The orientation determination system 300 includes a vision imaging system 302 having a pair of fixed, spaced apart cameras 310, 312 mounted on a beam 314. The beam 314 has a length sufficient to position the cameras 310, 312 respectively outboard of the sides of the vehicle to be imaged by the orientation determination system 300. Also, the beam 314 positions the cameras 310, 312 high enough above the shop floor 316 to ensure that the two target devices 318, 320 on the left side of the vehicle are both within the field of view of the left side camera 110, and two target devices 322, 324 on the right side of the vehicle are both within the field of view of the right side camera 312.

Target devices 318, 320, 322, 324 are mounted on each of the wheels 326, 328, 330, 332 of the motor vehicle, with each target device 318, 320, 322, 324 including an attachment apparatus 338. The attachment apparatus 338 attaches the target device 31 8, 320, 322, 324 to wheel 326, 328, 330, 332. An example of an attachment apparatus is described in U.S. Pat. No. 5,024,001, entitled "Wheel Alignment Rim Clamp Claw" issued to Borner et al. on Jun. 18, 1991.

In operation, once the orientation determination system 300 has been calibrated, as described in U.S. Pat. No. 5,535,522 and 5,724,743, a vehicle can be driven onto the rack 340, and, if desired, the vehicle lifted to an appropriate repair elevation. The target devices 318, 320, 322, 324, once attached to the wheel rims, are then oriented so that the target devices face the respective camera 310, 312.

The location of the target devices 318, 320, 322, 324 relative to the rim of the wheels 326, 328, 330, 332 to which the target devices are attached are typically known. Once the target devices 318, 320, 322, 324 have been imaged in one position, the wheels 326, 328, 330, 332 are rolled to another position and a new image can be taken. Using the imaged location of the target devices 318, 320, 322, 324 in the two positions, the actual position and orientation of the wheels 326, 328, 330, 332 and wheel axis can be calculated by the vision imaging system 302. Although the distance between the two positions varies, the distance is often approximately 8 inches both forward and back.

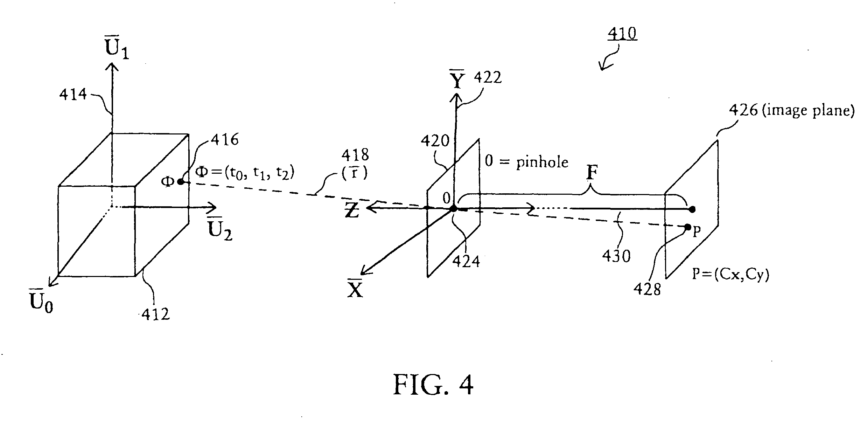

Fig. 4 describes the imaging geometry 410 of a wheel alignment system employing a three-dimensional target 412 based on a pinhole camera model. There are three coordinate systems: a 3D camera coordinate system 422, a 2D image coordinate system 426, and a 3D target coordinate system 414. The 3D camera coordinate system 422 has axes **X, Y,** and **Z,** respectively, and has its origin point O (424) as the focal point or pinhole. The 2D image coordinate system 426 is parallel to camera plane 420, formed by the **X** and **Y-axes,** and perpendicular to the Z-axis. The distance **F** from the origin of the 3D camera coordinate system 422 to the origin of the 2D image coordinate system 426 is the focal length of the imaging system 410. The 3D target coordinate system 414 has axes $U_0$, $U_1$, and $U_2$, respectively, defined in relation to the 3D camera coordinate system.

During imaging, each point on the three-dimensional target 412, e.g., point $\Phi$ 416, denoted by $\Phi=(t_0, t_1, t_2)$, where $t_0$, $t_1$, and $t_2$ are the coordinates of the point $\Phi$ in the 3D target coordinate system, i.e. components of the unit vector axes $U_0$, $U_1$, and $U_2$ of the 3D target coordinate system, is mathematically projected along vector r 418 and goes through the pinhole O 424 and arrives at point P on the 2D image plane 426 in the 2D image coordinate system. Such a 2D image point is denoted as $P=(c_x, c_y)$, where $c_X$ and $c_Y$ are the coordinates of this projected point in the 2D image coordinate system. The relationship between the 3D point $\Phi =(t_0, t_1, t_2)$ on the three-dimensional target (expressed in terms of the 3D target coordinate system) and the 2D image point $P = (c_x, c_y)$ is expressed as follows:

$$\mathbf{r} = \mathbf{C} + (t_0 * \mathbf{U_0}) + (t_1 * \mathbf{U_1}) + (t_2 * \mathbf{U_2})$$

$$c_X = F * (\mathbf{r} \cdot \mathbf{x}) / (\mathbf{r} \cdot \mathbf{z}),$$

$$c_Y = F * (\mathbf{r} \cdot \mathbf{y}) / (\mathbf{r} \cdot \mathbf{z}),$$

where r is the vector from the origin of the camera coordinate system to a point on the 3D target, $C=(C_X, C_Y, C_Z)$ (not shown) is a vector from the origin of the camera coordinate system to the origin of the target coordinate system, $U_0$, $U_1$, and $U_2$ are the orthogonal unit vector axes of the target coordinate system, defined relative to the camera coordinate system, and x, y, and z are the unit vectors of the camera coordinate system.

Substituting the expression of r, one can obtain the following:

$$\mathbf{r} = \mathbf{C} + (t_0 * \mathbf{U_0}) + (t_1 * \mathbf{U_1}) + (t_2 * \mathbf{U_2})$$

$$c_X = F * (C_X + (t_0 * U_0x) + (t_1 * U_1x) + (t_2 * U_2x)) / c_Z,$$

$$c_Y = F * (C_Y + (t_0 * U_0y) + (t_1 * U_1y) + (t_2 * U_2y)) / c_Z,$$

$$c_Z = C_Z + (t_0 * U_0z) + (t_1 * U_1z) + (t_2 * U_2z)$$

Assume each target element is observed in the acquired 2D image as a blob. Each such blob may be characterized by a centroid, and all the target elements can be denoted by measured centroid coordinates $(mx_i, my_i)$, where i is the index of a set of such centroids. Each such point (i) corresponds to a target element feature point $\Phi$ on the target.

To determine the orientation of a vehicle wheel relative to a camera in an imaging system as just described, from which misalignment of the vehicle wheel may be determined, the imaging system as depicted in Fig. 4 may be calibrated to derive a set of centroids corresponding to observed target elements on a three-dimensional target employed to determine wheel alignment.

Assume that this measured set of centroids $(mx_i, my_i)$ correspond to the projected set of points $(c_{Xi}, c_{Yi})$ from the set of target elements on the three-dimensional target, where i is the index of the set. To determine the orientation of the target relative to the camera, from which misalignment of a vehicle wheel mounted with a three-dimensional target as described herein may be determined, the following cost function can be minimized:

$$\rho = \sum_i ((c_{Xi} - mx_i)^2 + (c_{Yi} - my_i)^2)$$

where $(mx_i, my_i)$ represents the measured centroid coordinate of the ith target element of the three-dimensional target mounted on a vehicle wheel , measured in the 2D image acquired during wheel alignment, and coordinate $(c_{Xi}, c_{Yi})$ represents a corresponding point projected from a target element on a hypothetical three-dimensional target.

In some embodiments, the hypothetical three-dimensional target is a 3D target model. This 3D target model has a known structure with a plurality of facets, each having a plurality of target elements. The centroid of each target element on the 3D target model may be mathematically projected or transformed onto a 2D image plane to yield a set of projected or model centroids. Each of such transformed model centroid has a coordinate $(c_{Xi}, c_{Yi})$. In such a scenario, the model centroids can either be pre-stored or generated on the fly based on a plurality of stored parameters that are relevant to the transformation. Such parameters include camera parameters, the coordinate system for the 3D target model, the camera coordinate system, and the relationship between the camera coordinate system and the 3D target coordinate system.

The cost function $\rho$ is a function of six independent parameters describing the 3D orientation of the target relative to the camera, because a coordinate $(c_{Xi}, c_{Yi})$ represents a point projected on the camera plane after a 3D point going through a 3D transformation with six degrees of freedom. For example, the six degrees of freedom can be realized via six independent parameters, e.g., $C_X$, $C_Y$, $C_Z$ corresponding to translation in X-Y-Z directions, and yaw, tilt, and roll corresponding to rotations in the three dimensional space.

In minimizing the cost function p, the 3D coordinates of the hypothetical three-dimensional target are mathematically adjusted (via the 6 independent parameters) so that the difference between the two sets of 2D points, $(c_{Xi}, c_{Yi})$ and $(mx_i, my_i)$, are minimized. The adjustment made to the six independent parameters with respect to a calibrated 3D position that yields a minimum p representing the orientation of the target being measured.

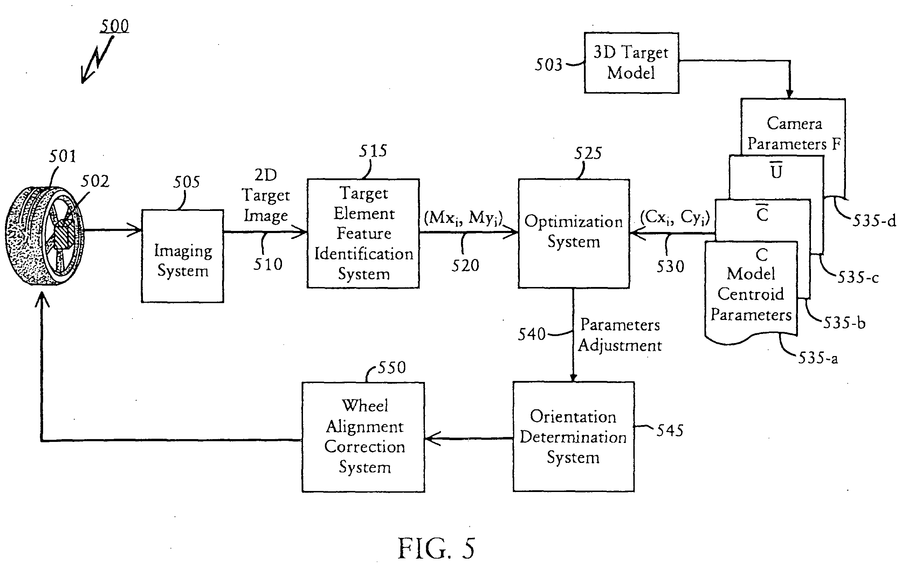

Fig. 5 depicts a high level diagram 500 of an exemplary wheel alignment system using a three-dimensional target, according to an embodiment of the present teaching. The vehicle wheel alignment system comprises a vehicle wheel 501 mounted with a three-dimensional target 502, an imaging system 505, a 3D target model 503, a target element feature identification system 515, an optimization system 525, and an orientation determination system 545. Optionally, a wheel alignment correction system 550 may also be included to correct misalignment if such misalignment is detected.

In operation, the imaging system 505 is set up according to the imaging geometry depicted in Fig. 4. The 3D target model 503 is used to generate model centroid coordinates $(c_{Xi}, c_{Yi})$ 535-a based on a plurality of system parameters such as camera parameters 535-d, the target coordinate system used 535-c, the camera coordinate system used 535-b, and the transformation relationship of the two.

The wheel alignment system 500 may be deployed to perform wheel alignment detection and correction thereof. When the three-dimensional target 502 is mounted on the vehicle wheel 501, e.g., in accordance with the system configuration as illustrated in Fig. 4, the 2D imaging system 505 is activated to acquire a 2D image 510 of the three-dimensional target 502. The target element feature identification system 515 analyzes the acquired 2D image 510 to obtain features such as target blobs, each of which corresponds to one target element, and/or centroids of such identified target blobs or $(mx_i, my_i)$ 520.

The detected 2D image features such as centroids $(mx_i, my_i)$ are sent to the optimization system 525, which minimizes the cost function $\rho$ by adjusting the 3D position of the hypothetical three-dimensional target or the 3D target model 503 with respect to six independent parameters as described herein. The adjustments made to the six independent parameters are then sent to the orientation determination system 545 where the orientation of the target 501 is determined based on the adjustment needed to minimize the cost function $\rho$. Then, the wheel alignment correction system 550 may compute the alignment parameters and any needed correction to the alignment of the wheel based on the measured orientation of the wheels relative to each other and the vehicle wheel alignment specifications stored in the database.

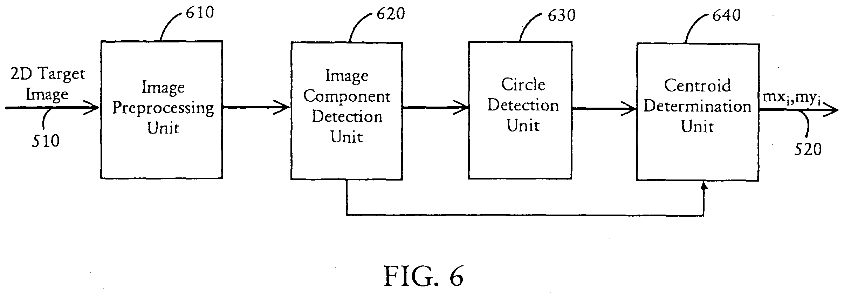

Fig. 6 depicts a high level diagram of the target element feature identification system 515, according to an embodiment of the present teaching. In this exemplary embodiment, circle target elements are detected and a centroid for each circle target element is obtained to represent the underlying target element. It should be understood that the 2D image features illustrated herein as well as the method and system employed herein to detect such 2D image features do not limit the scope of the present teaching. Other 2D images features may also be used and the corresponding method and system may be designed and implemented to detect, identify and characterize those 2D image features.

The target element feature identification system 515 comprises an image component detection unit 620, a circle detection unit 630, and a centroid determination unit 640. Optionally, the target element feature identification system 515 may also include an image pre-processing unit 610. A 2D target image 510, acquired by the imaging system 505 may first be pre-processed by the image preprocessing system 610. Such pre-processing may include image filtering, enhancement, or edge detection.

The image component detection unit 620 analyzes a 2D image, either 510 or from the image pre-processing unit 610, to identify meaningful components in the 2D image. Such components may include 2D regions within the 2D image, representing 2D blobs. Each of such blobs may be obtained by, e.g., performing some image segmentation operations. For instance, when the imaged target elements have distinct contrast compared to the background, segmentation may be performed via a threshold operation with respect to the intensity of pixels to obtain individual regions for the target elements or an overlapped version thereof.

In some embodiments, based on the segmented image blobs, further image analysis may be performed to identify desired features. For example, if it is known that target elements are circles, the circle detection unit 630 may be invoked to detect boundaries of each image blob and compare such boundaries to the boundary shapes of such circles projected onto an image plane of an imaging system such as the one herein described. Additional analysis may be applied when there is overlap among image blobs. In some embodiments, algorithms known in the art may be employed to detect the circle boundaries of overlapped image blobs. Such detected circles may be used to derive a certain representation for each circle target element. For instance, the radius of a target element may be computed based on such a detected circle. The projected center of a detected circle may be used as an estimate of the centroid of the circle.

In some embodiments, centroids may be derived directly from image components detected by the image component detection unit 620. For example, for each image blob, algorithms known in the art may be applied to compute a centroid coordinate based on the coordinates of all pixels within the image blob. In some embodiments, the centroid of an image blob may also be derived based on the boundary points of the image blob such as a circle identified by the circle detection unit 630.

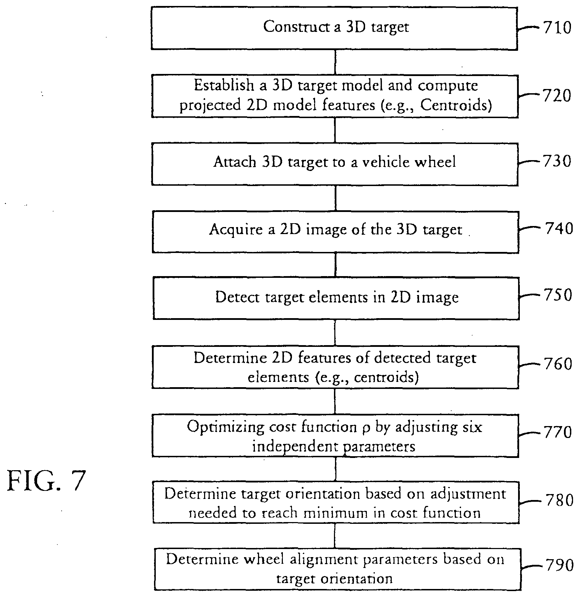

Fig. 7 is a flowchart of an exemplary process for determining wheel alignment using a three-dimensional target, according to an embodiment of the present teaching. At 710, a three-dimensional target is first designed or constructed and such a three-dimensional target may have a structure as illustrated in any of Figs. 2a-2e. The constructed three-dimensional target can also have any other 3D construct that is appropriate for wheel alignment. At 720, a three-dimensional target model (503 in Fig. 5) for the three-dimensional target is accordingly established and projected 2D features of the three-dimensional target model 503 are computed and stored for the purpose of determining wheel orientation based on the three-dimensional target model.

To perform wheel alignment, the constructed three-dimensional target is mounted, at 730, on a vehicle wheel according to certain geometric constraints as described herein. A calibrated camera in the system as shown in Fig. 4 is activated to capture, at 740, a 2D image of the three-dimensional target. Target elements on the three-dimensional target are identified, at 750, from the 2D image and corresponding features (e.g., centroids) of the target elements are then derived at 760. Such features are used to minimize, at 770, the cost function $\rho$ by adjusting the six independent parameters with respect to the 2D projected features of the three-dimensional target model 503. The adjustment made during the optimization process is then used, at 780, to compute the orientation of the target. At 790, the computed orientation of the target is then used to determine parameters to be used to align the vehicle wheel.

Below, the process of optimizing $\rho$ is described according to an embodiment of the present teaching. The cost function $\rho$ is a non-linear function of six parameters. There is no analytical solution to $\rho$. Therefore, its optimization usually requires an iterative process, hence, it is computationally expensive. There is a wealth of literature related to such minimization procedures. For example, the well-known least squares approach can be employed to optimize $\rho$. To improve speed in wheel alignment, in some embodiments of the present teaching, a revised optimization process is employed.

In such a revised optimization process, the six independent parameters are separately adjusted. Thus at each step of the optimization, only one of the six parameters is considered a variable, and the other five parameters are treated as constants. In this case, the cost function $\rho$ is still a non-linear function (a sum of ratios of polynomials) with no analytical solution. In some embodiments, the optimization with respect to one parameter may be carried out iteratively. In this case, each of the six parameters is adjusted, in a separate process, to minimize the cost function $\rho$ until the changes in $\rho$ caused by the adjustment is smaller than some threshold.

In some embodiments, the cost function with one parameter may be approximately solved. When the current parameter values are close to the values that minimize the cost function, the cost function $\rho$ with one parameter is approximately a parabolic function with a differentiable, smoothly varying functional curve. Assume a parabolic or quadratic function in one parameter is expressed as: $\rho(q) = a*q^2 + b*q + c$, where q is a parameter (one of the six independent parameters). The first and second derivatives of this function correspond to: $\rho'(q) = 2a*q + b$ and $\rho''(q) = 2a$. It is known that a minimum of $\rho(q)$ occurs at $q=q^*$ when the first derivative of $\rho(q)$ with respect to q is zero. That is, $\rho'(q) = 2a*q + b = 0$. Solving this equation, $q^* = -b / (2*a)$. Since $\rho'(q=0) = b$ and $\rho''(q=0) = 2a$, therefore, $q^* = - (\rho'(0) / \rho''(0))$. In this way, the parameter value $q^*$ of parameter q minimizes the one parameter cost function $\rho$. Here, $q^*$ corresponds to the adjustment made to parameter q in order to minimize $\rho$. Applying this technique to each parameter in turn, the parameter value for each of the other five independent parameters that minimize the cost function $\rho$ may be obtained.

The above discussed optimization process is applied to mathematical expressions corresponding to a perspective projection process. In some embodiments, a non-perspective solution may also be carried out. As discussed above, $c_z = C_z + (t_0 * U_0 z) + (t_1 * U_1 z) + (t_2 * U_2 z)$. If $Cz >> (t_0 * U_0 z) + (t_1 * U_1 z) + (t_2 * U_2 z)$, then $c_z$ is approximately independent of $U_0 z$, $U_1 z$, and $U_2 z$. This permits an analytical computation of parameters $C$, $U_0$, $U_1$, and $U_2$ instead of applying an iterative process such as a least-square fitting. Such a solution may be adequate as a final solution, or may be used as a starting point for the perspective calculation, giving parameter values close to the minimum, as required.

While the inventions have been described with reference to the certain illustrated embodiments, the words that have been used herein are words of description, rather than words of limitation. Changes may be made, within the purview of the appended claims, without departing from the invention in its aspects. Although the inventions have been described herein with reference to particular structures, acts, and materials, the invention is not to be limited to the particulars disclosed, but rather can be embodied in a wide variety of forms, some of which may be quite different from those of the disclosed embodiments, and extends to all equivalent structures, acts, and, materials, without departing from the scope of the invention as described herein and claimed in the appended claims.

**Claims**

1. A method for determining the alignment of a motor vehicle wheel, comprising the steps of:

   attaching a three-dimensional target (212) on the vehicle wheel (326, 328, 330, 332), the three-dimensional target (212) comprising a three-dimensional structure (214) arranged adjacent a planar surface (213), the three-dimensional structure (214) and the planar surface (213) having a certain relative spatial relationship, wherein each of the three-dimensional structure (214) and the planar surface (213) has thereon at least one target element of a plurality of target elements (216; 217a to 217d) having known geometric characteristics and the target elements are configured in 3D space in accordance with known three-dimensional relationships with each other;
   detecting, from a 2D image of the three-dimensional target (212) acquired by a camera (310, 312), a plurality of target element images corresponding to the plurality of target elements (216; 217a to 217d) including the at least one target element on the three-dimensional structure and the at least one target element on the planar surface; and
   determining the alignment of the wheel based on a spatial orientation of the three-dimensional target (212) determined by

      identifying a minimum in a cost function of six independent parameters describing a spatial orientation of the three-dimensional target relative to the camera by adjusting the independent parameters with respect to 2D projected features of the target elements (216; 217a to 217d) of the three-dimensional target (212) having the known three-dimensional relationships with each other; and
      computing the orientation of the target (212) based on the adjusted independent parameters.

2. The method according to claim 1, wherein the three dimensional target (212) has a plurality of facets, at least one of which has one or more target elements (216; 217a to 217d) residing on the surface of the facet.

3. The method according to claim 2, wherein the target elements (216; 217a to 217d) on a surface of a facet form part forms a prescribed pattern.

4. The method according to claim 2, wherein surfaces of different facets parts having target elements (216; 217a to 217d) thereon have known geometric relationships.

5. The method according to claim 2, wherein the plurality of facets parts are constructed within a housing for the three-dimensional target (212).

6. The method according to claim 1, wherein the target elements (216; 217a to 217d) are made retro-reflective and reside against a non-reflective surface of the three-dimensional target (212).

7. The method according to claim 1, wherein the target elements (216; 217a to 217d) are made non-reflective and reside against a retro-reflective surface of the three-dimensional target (212).

8. The method according to claim 1, wherein the step of determining the alignment comprises the step of detecting an image feature of each target element image.

9. The method according to claim 8, wherein the image feature includes a representative location of the target element image.

10. The method according to claim 9, wherein the representative location corresponds to a centroid of the corresponding target element image.

11. A system (500) for determining the alignment of a motor vehicle wheel, comprising:

a three-dimensional target (212) for attachment to a vehicle wheel (326, 328, 330, 332), the three-dimensional target (212) comprising a three-dimensional structure (214) arranged adjacent a planar surface (213), the three-dimensional structure (214) and the planar surface (213) having a certain relative spatial relationship, wherein each of the three-dimensional structure (213) and the planar surface (213) has thereon at least one target element of a plurality of target elements (216; 217a to 217d) having known geometric characteristics and the target elements are configured in 3D space in accordance with known three-dimensional relationships with each other;
a 2D imaging system (505) for acquiring a 2D image of the three dimensional target (212);
a target element feature detecting system (515) for detecting, from the 2D image, a plurality of target element images corresponding to the plurality of target elements (216; 217a to 217d) including the at least one target element on the three-dimensional structure and the at least one target element on the planar surface; and
a wheel alignment determination system for determining the alignment of the vehicle wheel (326, 328, 330, 332) based on a spatial orientation of the three-dimensional target (212) and comprising

an optimization system (525) configured to identify a minimum in a cost function of six independent parameters describing a spatial orientation of the three-dimensional target relative to the camera by adjusting the independent parameters with respect to 2D projected features of the target elements (216; 217a to 217d) of the three-dimensional target (212) having the known three-dimensional relationships with each other; and
an orientation determination system (545) configured to compute the orientation of the target (212) based on the adjusted independent parameters.

12. The system according to claim 11, wherein the three dimensional target (212) has a plurality of facets, at least one of which has one or more target elements (216; 217a to 217d) residing on a surface of the facet.

13. The system according to claim 12, wherein the target elements (216; 217a to 217d) on a surface of a facet forms a prescribed pattern.

14. The system according to claim 12, wherein surfaces of different facets having target elements (216; 217a to 217d) thereon form known certain geometric relationships.

15. The system according to claim 12, wherein the plurality of facets are constructed within a housing for the three-dimensional target (212).

16. The system according to claim 11, wherein the target elements (216; 217a to 217d) are made retro-reflective and reside against a non-reflective surface of the three-dimensional target (212).

**17.** The system according to claim 11, wherein the target elements (216; 217a to 217d) are made non-reflective and reside against a retro-reflective surface of the three-dimensional target (212).

**Patentansprüche**

**1.** Verfahren zur Bestimmung der Ausrichtung eines Motorfahrzeugrads, das die folgenden Schritte umfasst:

Befestigen eines dreidimensionalen Ziels (212) auf dem Fahrzeugrad (326, 328, 330, 332), wobei das dreidimensionale Ziel (212) eine dreidimensionale Struktur (214) umfasst, die benachbart zu einer planaren Fläche (213) angeordnet ist, wobei die dreidimensionale Struktur (213) und die planare Fläche (213) eine gewisse relative räumliche Beziehung haben, wobei jede der dreidimensionalen Struktur (214) und der planaren Fläche (213) wenigstens ein Zielelement von einer Vielzahl von Zielelementen (216; 217a bis 217d) mit bekannten geometrischen Charakteristiken darauf hat, und wobei die Zielelemente in dem 3D-Raum gemäß bekannten dreidimensionalen Beziehungen untereinander konfiguriert werden;
Erfassen einer Vielzahl von Zielelementbildern, die der Vielzahl von Zielelementen (216; 217a bis 217d) einschließlich des wenigstens einen Zielelements auf der dreidimensionalen Struktur und des wenigstens einen Zielelements auf der zweiten planaren Fläche (213) entsprechen, aus einem 2D-Bild des dreidimensionalen Ziels (212), das von der Kamera (310, 312) aufgenommen wird; und
Bestimmen der Ausrichtung des Rads basierend auf einer räumlichen Orientierung des dreidimensionalen Ziels (212), die bestimmt wird durch:

Identifizieren eines Minimums in einer Kostenfunktion aus sechs unabhängigen Parametern, die eine räumliche Orientierung des dreidimensionalen Ziels relativ zu der Kamera beschreibt, indem die unabhängigen Parameter in Bezug auf 2D-projizierte Merkmale der Zielelemente (216; 217a bis 217d) des dreidimensionalen Ziels (212) mit den bekannten dreidimensionalen Beziehungen untereinander eingestellt werden; und
Berechnen der Orientierung des Ziels (212) basierend auf den eingestellten unabhängigen Parametern.

**2.** Verfahren nach Anspruch 1, wobei das dreidimensionale Ziel (212) eine Vielzahl von Facetten hat, von denen wenigstens eine ein oder mehr Zielelemente (216; 217a bis 217d) hat, die auf der Fläche der Facette liegen.

**3.** Verfahren nach Anspruch 2, wobei die Zielelemente (216; 217a bis 217d) auf einer Fläche einer Facette einen Teil eines vorgeschriebenen Musters bilden.

**4.** Verfahren nach Anspruch 2, wobei die Flächen verschiedener Facetten Teile mit Zielelementen (216; 217a bis 217d) mit bekannten geometrischen Beziehungen darauf haben.

**5.** Verfahren nach Anspruch 2, wobei die Vielzahl von Facetten mit einem Gehäuse für das dreidimensionale Ziel (212) aufgebaut ist.

**6.** Verfahren nach Anspruch 1, wobei die Zielelemente (216; 217a bis 217d) retroreflektierend hergestellt sind und gegen eine nicht reflektierende Fläche des dreidimensionalen Ziels (212) liegen.

**7.** Verfahren nach Anspruch 1, wobei die Zielelemente (216; 217a bis 217d) nicht reflektierend hergestellt sind und gegen eine retroreflektierende Fläche des dreidimensionalen Ziels (212) liegen.

**8.** Verfahren nach Anspruch 1, wobei der Schritt des Bestimmens der Ausrichtung den Schritt des Erfassens eines Bildmerkmals jedes Zielelementbilds umfasst.

**9.** Verfahren nach Anspruch 8, wobei das Bildmerkmal einen repräsentativen Ort des Zielelementbilds umfasst.

**10.** Verfahren nach Anspruch 9, wobei der repräsentative Ort ein Schwerpunkt des entsprechenden Zielelementbilds ist.

**11.** System (500) zur Bestimmung der Ausrichtung eines Motorfahrzeugrads, das umfasst:

ein dreidimensionales Ziel (212) zur Befestigung an einem Fahrzeugrad (326, 328, 330, 332), wobei das dreidimensionale Ziel (212) eine dreidimensionale Struktur (214) umfasst, die benachbart zu einer planaren Fläche (213) angeordnet ist, wobei die dreidimensionale Struktur (213) und die planare Fläche (213) eine gewisse relative räumliche Beziehung haben, wobei jede der dreidimensionalen Struktur (214) und der planaren Fläche (213) wenigstens ein Zielelement von einer Vielzahl von Zielelementen (216; 217a bis 217d) mit bekannten geometrischen Charakteristiken darauf hat, und wobei die Zielelemente in dem 3D-Raum gemäß bekannten dreidimensionalen Beziehungen untereinander konfiguriert werden;

ein 2D-Abbildungssystem (505) zum Erfassen eines 2D-Bilds des dreidimensionalen Ziels (212);

ein Zielelement-Merkmalserfassungssystem (515), um aus dem 2D-Bild aus einer Vielzahl von Zielelementbildern, die der Vielzahl von Zielelementen (216; 217a bis 217d) einschließlich des wenigstens einen Zielelements auf der dreidimensionalen Struktur und des wenigstens einen Zielelements auf der zweiten planaren Fläche entsprechen, zu erfassen;

ein Radausrichtungsbestimmungssystem zum Bestimmen der Ausrichtung des Fahrzeugrads (326, 328, 330, 332) basierend auf einer räumlichen Orientierung des dreidimensionalen Ziels (212) und das umfasst:

ein Optimierungssystem (525), das konfiguriert ist, um ein Minimum in einer Kostenfunktion aus sechs unabhängigen Parametern, die eine räumliche Orientierung des dreidimensionalen Ziels relativ zu der Kamera beschreibt, zu identifizieren, indem die unabhängigen Parameter in Bezug auf 2D-projizierte Merkmale der Zielelemente (216; 217a bis 217d) des dreidimensionalen Ziels (212) mit den bekannten dreidimensionalen Beziehungen untereinander eingestellt werden; und

ein Orientierungsbestimmungssystem (545), das konfiguriert ist, um die Orientierung des Ziels (212) basierend auf den eingestellten unabhängigen Parametern zu berechnen.

12. System nach Anspruch 11, wobei das dreidimensionale Ziel (212) eine Vielzahl von Facetten hat, von denen wenigstens eine ein oder mehr Zielelemente (216; 217a bis 217d) hat, die auf der Fläche der Facette liegen.

13. System nach Anspruch 12, wobei die Zielelemente (216; 217a bis 217d) auf einer Fläche einer Facette einen Teil eines vorgeschriebenen Musters bilden.

14. System nach Anspruch 12, wobei die Flächen verschiedener Facetten Zielelemente (216; 217a bis 217d) mit bekannten geometrischen Beziehungen darauf haben.

15. Verfahren nach Anspruch 12, wobei die Vielzahl von Facetten mit einem Gehäuse für das dreidimensionale Ziel (212) aufgebaut ist.

16. System nach Anspruch 11, wobei die Zielelemente (216; 217a bis 217d) retroreflektierend hergestellt sind und gegen eine nicht reflektierende Fläche des dreidimensionalen Ziels (212) liegen.

17. System nach Anspruch 11, wobei die Zielelemente (216; 217a bis 217d) nicht reflektierend hergestellt sind und gegen eine retroreflektierende Fläche des dreidimensionalen Ziels (212) liegen.

**Revendications**

1. Procédé pour déterminer l'alignement d'une roue de véhicule à moteur, comprenant les étapes qui consistent à :

attacher une cible tridimensionnelle (212) sur la roue de véhicule (326, 328, 330, 332), la cible tridimensionnelle (212) comprenant une structure tridimensionnelle (214) placée de manière adjacente à une surface plane (213), la structure tridimensionnelle (214) et la surface plane (213) présentant une certaine relation spatiale relative, dans lequel chacune de la structure tridimensionnelle (214) et de la surface plane (213) est recouverte d'au moins un élément cible d'une pluralité d'éléments cibles (216 ; 217a à 217d) ayant des caractéristiques géométriques connues, et les éléments cibles sont conçus dans un espace 3D conformément à des relations tridimensionnelles connues les uns avec les autres ;

détecter, à partir d'une image 2D de la cible tridimensionnelle (212) acquise par une caméra (310, 312), une pluralité d'images d'éléments cibles qui correspondent à la pluralité d'éléments cibles (216; 217a à 217d), y compris le au moins un élément cible sur la structure tridimensionnelle et le au moins un élément cible sur la surface plane ; et

déterminer l'alignement de la roue basé sur une orientation spatiale de la cible tridimensionnelle (212) déterminée en

identifiant un minimum dans une fonction de coût de six paramètres indépendants qui décrivent une orientation

**EP 2 153 168 B1**

spatiale de la cible tridimensionnelle par rapport à la caméra en réglant les paramètres indépendants par rapport à des caractéristiques 2D projetées des éléments cibles (216 ; 217a à 217d) de la cible tridimensionnelle (212) ayant les relations tridimensionnelles connues les uns avec les autres ; et

calculant l'orientation de la cible (212) basé sur les paramètres indépendants réglés.

2. Procédé selon la revendication 1, dans lequel la cible tridimensionnelle (212) présente une pluralité de facettes, dont au moins une comprend un ou plusieurs éléments cibles (216 ; 271 a à 217d) qui reposent sur la surface de la facette.

3. Procédé selon la revendication 2, dans lequel les éléments cibles (216 ; 217a à 217d) sur une surface d'une facette forment des formes partielles d'un motif prescrit.

4. Procédé selon la revendication 2, dans lequel des surfaces de différentes parties de facettes ayant des éléments cibles (216 ; 217a à 217d) qui les recouvrent présentent des relations géométriques connues.

5. Procédé selon la revendication 2, dans lequel la pluralité de parties de facettes sont construites à l'intérieur d'un logement pour la cible tridimensionnelle (212).

6. Procédé selon la revendication 1, dans lequel les éléments cibles (216 ; 217a à 217d) sont rendus rétro-réfléchissants et reposent contre une surface non réfléchissante de la cible tridimensionnelle (212).

7. Procédé selon la revendication 1, dans lequel les éléments cibles (216 ; 217a à 217d) sont rendus non réfléchissants et reposent contre une surface rétro-réfléchissante de la cible tridimensionnelle (212).

8. Procédé selon la revendication 1, dans lequel l'étape de déterminer de l'alignement comprend l'étape de détecter d'une caractéristique d'image de chaque image d'élément cible.

9. Procédé selon la revendication 8, dans lequel la caractéristique d'image comprend un emplacement représentatif de l'image d'élément cible.

10. Procédé selon la revendication 9, dans lequel l'emplacement représentatif correspond à un centroïde de l'image d'élément cible correspondant.

11. Système (500) pour déterminer l'alignement d'une roue de véhicule à moteur, comprenant :

une cible tridimensionnelle (212) pour fixation à une roue de véhicule (326, 328, 330, 332), la cible tridimensionnelle (212) comprenant une structure tridimensionnelle (214) placée de manière adjacente à une surface plane (213), la structure tridimensionnelle (214) et la surface plane (213) présentant une certaine relation spatiale relative, dans lequel chacune de la structure tridimensionnelle (213) et de la surface plane (213) est recouverte d'au moins un élément cible d'une pluralité d'éléments cibles (216 ; 217a à 217d) ayant des caractéristiques géométriques connues, et les éléments cibles sont conçus dans un espace 3D conformément à des relations tridimensionnelles connues les uns avec les autres ;
un système d'imagerie 2D (505) pour l'acquisition d'une image 2D de la cible tridimensionnelle (212) ;
un système de détection d'une caractéristique d'élément cible (515) pour détecter, à partir de l'image 2D, une pluralité d'images d'éléments cibles qui correspondent à la pluralité d'éléments cibles (216; 217a à 217d), y compris le au moins un élément cible sur la structure tridimensionnelle et le au moins un élément cible sur la surface plane ; et
un système de détermination de l'alignement d'une roue pour déterminer l'alignement de la roue de véhicule (326, 328, 330, 332) basé sur une orientation spatiale de la cible tridimensionnelle (212) et comprenant

un système d'optimisation (525) conçu pour identifier un minimum dans une fonction de coût de six paramètres indépendants qui décrivent une orientation spatiale de la cible tridimensionnelle par rapport à la caméra en réglant les paramètres indépendants par rapport à des caractéristiques 2D projetées des éléments cibles (216 ; 217a à 217d) de la cible tridimensionnelle (212) ayant les relations tridimensionnelles connues les uns avec les autres ; et
un système de détermination de l'orientation (545) conçu pour calculer l'orientation de la cible (212) basé sur les paramètres indépendants réglés.

**12.** Système selon la revendication 11, dans lequel la cible tridimensionnelle (212) présente une pluralité de facettes, dont au moins une comprend un ou plusieurs éléments cibles (216 ; 271 a à 217d) qui reposent sur une surface de la facette.

**13.** Système selon la revendication 12, dans lequel les éléments cibles (216 ; 217a à 217d) sur une surface d'une facette forment un motif prescrit.

**14.** Système selon la revendication 12, dans lequel des surfaces de différentes facettes ayant des éléments cibles (216 ; 217a à 217d) qui les recouvrent forment certaines relations géométriques.

**15.** Système selon la revendication 12, dans lequel la pluralité de facettes sont construites à l'intérieur d'un logement pour la cible tridimensionnelle (212).

**16.** Système selon la revendication 11, dans lequel les éléments cibles (216 ; 217a à 217d) sont rendus rétro-réfléchissants et reposent contre une surface non réfléchissante de la cible tridimensionnelle (212).

**17.** Système selon la revendication 11, dans lequel les éléments cibles (216 ; 217a à 217d) sont rendus non réfléchissants et reposent contre une surface rétro-réfléchissante de la cible tridimensionnelle (212).

FIG. 1 (PRIOR ART)

FIG. 2a

FIG. 2b

FIG. 2c

EP 2 153 168 B1

FIG. 2d

EP 2 153 168 B1

FIG. 2e

FIG. 3

EP 2 153 168 B1

FIG. 4

FIG. 5

FIG. 6

| Construct a 3D target | — 710 |

| Establish a 3D target model and compute projected 2D model features (e.g., Centroids) | — 720 |

| Attach 3D target to a vehicle wheel | — 730 |

| Acquire a 2D image of the 3D target | — 740 |

| Detect target elements in 2D image | — 750 |

| Determine 2D features of detected target elements (e.g., centroids) | — 760 |

| Optimizing cost function ρ by adjusting six independent parameters | — 770 |

FIG. 7

| Determine target orientation based on adjustment needed to reach minimum in cost function | — 780 |

| Determine wheel alignment parameters based on target orientation | — 790 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5535522 A
- US 5809658 A
- US 6148528 A
- WO 0146909 A
- US 2006152711 A1
- US 6973202 B2
- JP 2002090118 A
- JP 61277010 A
- US 2003187610 A1
- EP 0806629 A
- US 5024001 A
- US 5724743 A